# EUROPEAN PATENT APPLICATION

(11) **EP 4 818 548 A1**
(43) Date of publication of application: **07.10.2026**
(21) Application number: 24895544.5
(22) Date of filing: 13.06.2024
(51) Int. Cl.: F16H 3/091, B60K 6/36

(54) **TRANSMISSION, POWER SYSTEM, VEHICLE AND VEHICLE CONTROL METHOD**

(30) Priority: 30.11.2023 CN 202311635457
(71) Applicant: BYD Company Limited, Shenzhen, Guangdong 518118 (CN)
(72) Inventor: TANG, Lizhong, Shenzhen, Guangdong 518118 (CN); YAO, Yan, Shenzhen, Guangdong 518118 (CN); MU, Jinhui, Shenzhen, Guangdong 518118 (CN); FENG, Yuyang, Shenzhen, Guangdong 518118 (CN); ZHANG, Yisheng, Shenzhen, Guangdong 518118 (CN)
(74) Representative: Mathys & Squire
(86) International application number: PCT/CN2024/098926
(87) International publication number: WO 2025/112440

(57) **Abstract**

The present disclosure discloses a transmission, a powertrain system, a vehicle, and a method for controlling a vehicle. The transmission includes a first shaft (2), a second shaft (3), and a first gear member (31). The first shaft (2) is adapted to be drivingly connected to an engine (1), the second shaft (3) is adapted to be drivingly connected to a wheel end (5), the first gear member (31) is sleeved on the second shaft (3), the first gear member (31) is drivingly connected to the first shaft (2), the first gear member (31) is selectively drivingly connected to the second shaft (3), and the first gear member (31) is adapted to be drivingly connected to a first motor shaft (41) of a first motor (4).

## Description

### CROSS-REFERENCE TO RELATED APPLICATIONS

The present disclosure claims priority to Chinese Patent Application No. 202311635457.5, filed on November 30, 2023 and entitled "TRANSMISSION, POWERTRAIN SYSTEM, VEHICLE, AND METHOD FOR CONTROLLING VEHICLE", which is incorporated herein by reference in its entirety.

### TECHNICAL FIELD

The present disclosure relates to the field of vehicle technologies, and in particular, to a vehicle powertrain system, a vehicle, and a method for controlling a vehicle.

### BACKGROUND

In related technologies, the transmission of a vehicle occupies relatively large space. Because space in a compartment of an engine is limited, arrangement of other components in the vehicle may be restricted if space occupied by the transmission is excessively large. Therefore, how to implement miniaturization of the transmission is an urgent issue that needs to be addressed.

### SUMMARY

The present disclosure is intended to resolve at least one of the foregoing technical problems in conventional technologies to some extent. Therefore, the present disclosure provides a transmission, to implement miniaturization of the transmission.

The present disclosure further provides a powertrain system having the foregoing transmission.

The present disclosure further provides a vehicle having the foregoing powertrain system.

The present disclosure further provides a method for controlling a vehicle.

A transmission according to an embodiment of a first aspect of the present disclosure includes: a first shaft, wherein the first shaft is adapted to be drivingly connected to an engine; a second shaft, wherein the second shaft is adapted to be drivingly connected to a wheel end; and a first gear member, wherein the first gear member is sleeved on the second shaft, the first gear member being drivingly connected to the first shaft, the first gear member being selectively drivingly connected to the second shaft, and the first gear member being adapted to be drivingly connected to a first motor shaft of a first motor.

According to the transmission in this embodiment of the present disclosure, the first gear member is drivingly connected to the first shaft, the first gear member is adapted to be drivingly connected to the first motor shaft of the first motor, and the first gear member is further selectively drivingly connected to the second shaft, so that the first gear member can be used as both a speed gear of the engine and a power generation gear. This helps reduce costs of the transmission and reduce space occupied by the transmission, thereby helping implement miniaturization of the transmission, and facilitating arrangement of the transmission in a vehicle.

A powertrain system according to an embodiment of a second aspect of the present disclosure includes: a transmission, wherein the transmission is the foregoing transmission; an engine, wherein the engine is drivingly connected to the first shaft; and a first motor, wherein a first motor shaft of the first motor is drivingly connected to the first gear member.

According to the powertrain system in this embodiment of the present disclosure, the first gear member of the transmission of the powertrain system is drivingly connected to the first shaft, the first gear member is drivingly connected to the first motor shaft of the first motor, and the first gear member is further selectively drivingly connected to the second shaft, so that the first gear member can be used as both a speed gear of the engine and a power generation gear. This helps reduce costs of the powertrain system and reduce space occupied by the powertrain system, thereby helping implement miniaturization of the powertrain system, and facilitating arrangement of the powertrain system in a vehicle.

A vehicle according to an embodiment of a third aspect of the present disclosure includes the foregoing powertrain system of the vehicle.

According to the vehicle in this embodiment of the present disclosure, the first gear member of the transmission of the vehicle is drivingly connected to the first shaft, the first gear member is drivingly connected to the first motor shaft of the first motor, and the first gear member is further selectively drivingly connected to the second shaft, so that the first gear member can be used as both a speed gear of the engine and a power generation gear. This helps reduce costs of the powertrain system and reduce space occupied by the powertrain system, thereby helping implement miniaturization of the powertrain system, and facilitating arrangement of the powertrain system in a vehicle.

A method for controlling a vehicle according to an embodiment of a fourth aspect of the present disclosure is applied to the foregoing powertrain system. The method includes: obtaining a status parameter of the vehicle, wherein the status parameter includes a state of charge value of a battery and required power; and determining a target working mode based on the status parameter, and controlling the powertrain system to work in the target working mode.

According to the method for controlling a vehicle in this embodiment of the present disclosure, the target working mode may be determined based on the status parameter of the vehicle such as the state of charge value of the battery and the required power, and the powertrain system of the vehicle is controlled to work in the target working mode, to meet a driving intention of a driver, thereby implementing intelligent control of the vehicle.

Additional aspects and advantages of the present disclosure are to be partially provided in the following description, and partially become clear from the following description, or will be understood through practice of the present disclosure.

### BRIEF DESCRIPTION OF DRAWINGS

FIG. 1 is a schematic diagram of a transmission and a powertrain system having the transmission according to an embodiment of the present disclosure;
FIG. 2 is a schematic diagram of a transmission and a powertrain system having the transmission according to another embodiment of the present disclosure;
FIG. 3 is a schematic diagram of power transmission of a powertrain system in a stationary power generation mode according to an embodiment of the present disclosure;
FIG. 4 is a schematic diagram of power transmission of a powertrain system in a pure electric mode according to an embodiment of the present disclosure;
FIG. 5 is a schematic diagram of power transmission of a powertrain system in a parallel first-gear mode according to an embodiment of the present disclosure;
FIG. 6 is a schematic diagram of power transmission of a powertrain system in a parallel second-gear mode according to an embodiment of the present disclosure;
FIG. 7 is a schematic diagram of power transmission of a powertrain system in a series mode according to an embodiment of the present disclosure;
FIG. 8 is a schematic diagram of power transmission of a powertrain system in a regenerative power generation mode according to an embodiment of the present disclosure;
FIG. 9 is a block diagram of a vehicle according to an embodiment of the present disclosure; and
FIG. 10 is a flowchart of a method for controlling a vehicle according to an embodiment of the present disclosure.

### Reference numerals:

engine 1; shock absorption apparatus 11;
first shaft 2; second gear 21; fourth gear 22; first coupling apparatus 23;
second shaft 3; first gear member 31; first sub-gear 311; second sub-gear 312; third gear 32; second coupling apparatus 33; seventh gear 35;
first motor 4; first motor shaft 41; sixth gear 42;
wheel end 5; differential 6; eighth gear 7;
second motor 8; second motor shaft 81; ninth gear 82;
transmission assembly 9; third shaft 91; tenth gear 92; eleventh gear 93;
VCU 20; electronic control module 30; battery 40; accelerator pedal 50; brake pedal 60; and hydraulic module 70.

### DESCRIPTION OF EMBODIMENTS

The following describes in detail embodiments of the present disclosure. Examples of the embodiments are shown in the accompanying drawings, and same or similar reference numerals throughout represent same or similar elements or elements having same or similar functions. The embodiments described below with reference to the accompanying drawings are examples, and are intended to explain the present disclosure and shall not be construed as limitations on the present disclosure.

In the description of the present disclosure, it will be understood that the orientations or positional relationships indicated by the terms "front", "back", "left", "right", "up", "down", and the like are based on the orientations or positional relationships shown in the accompanying drawings and are only for ease of describing the present disclosure and simplifying the description, rather than indicating or implying that an indicated apparatus or element must have a specific orientation or must be constructed and operated in a specific orientation, and therefore will not be construed as a limitation on the present disclosure.

In addition, the terms "first" and "second" are used for a descriptive purpose only and will not be understood as indicating or implying relative importance or implicitly indicating a quantity of indicated technical features. Therefore, a feature defined by "first" or "second" may explicitly or implicitly include one or more of such features. In the description of the present disclosure, "a plurality of" means at least two, for example, two or three, unless otherwise clearly and specifically limited.

In the present disclosure, unless otherwise explicitly specified and defined, terms such as "mount", "interconnect", "connect", and "fasten" will be understood in a broad sense. For example, a connection may be a fixed connection, a detachable connection, or an integrated connection; may be a mechanical connection, or an electrical connection or mutual communication; may be a direct connection or an indirect connection through an intermediate medium; or may be internal communication between two elements or an interaction relationship between two elements. A person of ordinary skill in the art will understand specific meanings of the foregoing terms in the present disclosure based on specific situations.

A transmission, a powertrain system, a vehicle, and a method for controlling a vehicle according to embodiments of the present disclosure are described in detail below with reference to the accompanying drawings.

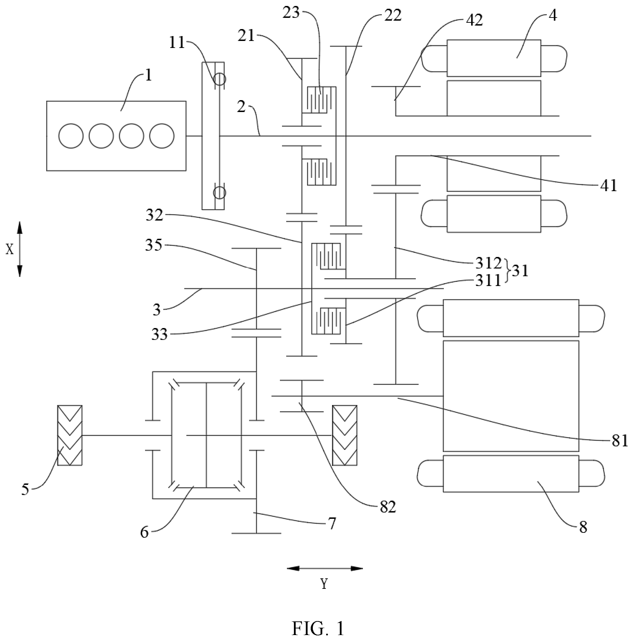

Referring to FIG. 1, according to a transmission in an embodiment of a first aspect of the present disclosure, the transmission may be used in a powertrain system of a vehicle, and the transmission includes a first shaft 2, a second shaft 3, and a first gear member 31.

The first shaft 2 is adapted to be drivingly connected to an engine 1, the second shaft 3 is adapted to be drivingly connected to a wheel end 5, the first gear member 31 is sleeved on the second shaft 3, the first gear member 31 is drivingly connected to the first shaft 2, the first gear member 31 is selectively drivingly connected to the second shaft 3, and the first gear member 31 is adapted to be drivingly connected to a first motor shaft 41 of a first motor 4. Therefore, the first gear member 31 can be used as both a speed gear of the engine 1 and a power generation gear, to reduce costs of the transmission and reduce space occupied by the transmission.

Specifically, the engine 1 may be drivingly connected to the first shaft 2 through a shock absorption apparatus 11. The shock absorption apparatus 11 may isolate torsional vibration of a crankshaft of the engine 1 when transmitting power. The shock absorption apparatus 11 may be a torsional shock absorber or a double-mass flywheel. An output end of the engine 1 may be rigidly connected to an input end of the shock absorption apparatus 11. An output end of the shock absorption apparatus 11 is drivingly connected to the first shaft 2 through a spline. Power output by the engine 1 may be transmitted to the first shaft 2 through the shock absorption apparatus 11, to drive the first shaft 2 to rotate. The first shaft 2 may drive the first gear member 31 to rotate.

When the first gear member 31 rotates, if the first gear member 31 is not drivingly connected to the second shaft 3, the first gear member 31 may rotate idly relative to the second shaft 3. The first gear member 31 drives the first motor shaft 41 of the first motor 4 to rotate, so that the first motor 4 generates power. In this case, the first gear member 31 is used as a power generation gear.

When the first gear member 31 rotates, if the first gear member 31 is drivingly connected to the second shaft 3, the first gear member 31 may transmit power to the wheel end 5 of the vehicle through the second shaft 3, to drive the vehicle to travel. In this case, the first motor 4 has two cases: Case 1: when the first motor 4 is not connected to a battery 40 or an electric device, the first gear member 31 drives the first motor shaft 41 of the first motor 4 to rotate idly, that is, all power output by the engine 1 is transmitted to the wheel end 5. In this case, the first gear member 31 is used as a speed gear of the engine 1. Case 2: when the first motor 4 is connected to the battery 40 or the electric device, the first gear member 31 drives the first motor shaft 41 of the first motor 4 to rotate, so that the first motor 4 generates power. To be specific, one part of power output by the engine 1 is transmitted to the wheel end 5, to drive the vehicle to travel, and the other part of power output by the engine 1 drives the first motor 4 to generate power. In this case, the first gear member 31 is used as both a speed gear of the engine 1 and a power generation gear.

According to the transmission in this embodiment of the present disclosure, the first gear member 31 is drivingly connected to the first shaft 2, the first gear member 31 is adapted to be drivingly connected to the first motor shaft 41 of the first motor 4, and the first gear member 31 is further selectively drivingly connected to the second shaft 3, so that the first gear member 31 can be used as both a speed gear of the engine 1 and a power generation gear. This helps reduce costs of the transmission and reduce space occupied by the transmission, thereby helping implement miniaturization of the transmission, and facilitating arrangement of the transmission in the vehicle.

In some embodiments of the present disclosure, referring to FIG. 1, the transmission further includes a second gear 21, a first coupling apparatus 23, a third gear 32, a fourth gear 22, and a second coupling apparatus 33. The second gear 21 is sleeved on the first shaft 2. A first end of the first coupling apparatus 23 is connected to the second gear 21, a second end of the first coupling apparatus 23 is connected to the first shaft 2, and the first end of the first coupling apparatus 23 is selectively drivingly connected to the second end of the first coupling apparatus 23. The third gear 32 is disposed on the second shaft 3, and the second gear 21 meshes with the third gear 32. The fourth gear 22 is disposed on the first shaft 2, and the fourth gear 22 meshes with the first gear member 31. A first end of the second coupling apparatus 33 is connected to the first gear member 31, a second end of the second coupling apparatus 33 is connected to the second shaft 3, and the first end of the second coupling apparatus 33 is selectively drivingly connected to the second end of the second coupling apparatus 33, to implement flexible switching between two gears of the transmission.

It will be understood that the first coupling apparatus 23 has an engaged state and a disengaged state. When the first end of the first coupling apparatus 23 is drivingly connected to the second end of the first coupling apparatus 23, the first coupling apparatus 23 is in the engaged state, and the second gear 21 is drivingly connected to the first shaft 2 through the first coupling apparatus 23. When the first end of the first coupling apparatus 23 disconnects from the driving connection to the second end of the first coupling apparatus 23, the first coupling apparatus 23 is in the disengaged state, and the second gear 21 releases the driving connection from the first shaft 2.

The second coupling apparatus 33 has an engaged state and a disengaged state. When the first end of the second coupling apparatus 33 is drivingly connected to the second end of the second coupling apparatus 33, the second coupling apparatus 33 is in the engaged state, and the first gear member 31 is drivingly connected to the second shaft 3 through the second coupling apparatus 33. When the first end of the second coupling apparatus 33 disconnects from the driving connection to the second end of the second coupling apparatus 33, the second coupling apparatus 33 is in the disengaged state, and the first gear member 31 releases the driving connection to the second shaft 3.

Specifically, referring to FIG. 1, the second coupling apparatus 33 is connected between the first gear member 31 and the second shaft 3 to selectively engage the first gear member 31 and the second shaft 3. The first coupling apparatus 23 is connected between the second gear 21 and the first shaft 2 to selectively engage the second gear 21 and the first shaft 2. The second coupling apparatus 33 and the first coupling apparatus 23 may facilitate switching between two gears. The second coupling apparatus 33 may be a second clutch, and the first coupling apparatus 23 may be a first clutch. The second coupling apparatus 33 and the first coupling apparatus 23 are in smooth engagement during shifting, and shifting is smoother compared with that performed through a synchronizer. The first end of the second coupling apparatus 33 may be a second inner hub, and the second inner hub may be rigidly connected to the first gear member 31. The second end of the second coupling apparatus 33 may be a second outer hub, and the second outer hub may be rigidly connected to the second shaft 3. The first end of the first coupling apparatus 23 may be a first inner hub, and the first inner hub may be rigidly connected to the second gear 21. The second end of the first coupling apparatus 23 may be a first outer hub, and the first outer hub may be rigidly connected to the first shaft 2. When the first end of the first coupling apparatus 23 is drivingly connected to the second end of the first coupling apparatus 23, the second gear 21 is drivingly connected to the first shaft 2 through the first coupling apparatus 23, and power output by the engine 1 may be transmitted to the wheel end 5 sequentially through the first shaft 2, the second gear 21, the third gear 32, and the second shaft 3. When the first end of the second coupling apparatus 33 is drivingly connected to the second end of the second coupling apparatus 33, the second gear 21 is drivingly connected to the second shaft 3 through the second coupling apparatus 33, and power output by the engine 1 may be transmitted to the wheel end 5 sequentially through the first shaft 2, the fourth gear 22, the first gear member 31, and the second shaft 3.

It will be understood that there are two gears in a power transmission path from the engine 1 to the wheel end 5, and flexible switching between the two gears may be implemented by using the second coupling apparatus 33 and the first coupling apparatus 23. The first coupling apparatus 23 is disposed on the first shaft 2, and the second coupling apparatus 33 is disposed on the second shaft 3. The second coupling apparatus 33 and the first coupling apparatus 23 that are disposed on different shafts may facilitate structural arrangement of the transmission, to avoid excessively large axial sizes of the first shaft 2 and the second shaft 3, thereby facilitating arrangement of the transmission in the vehicle.

In some embodiments of the present disclosure, referring to FIG. 1, the second gear 21 and the third gear 32 are configured as a first gear pair, the first gear member 31 and the fourth gear 22 are configured as a second gear pair, and a gear ratio of the first gear pair is greater than a gear ratio of the second gear pair. The engine 1 may output power to the wheel end 5 through the first gear pair or the second gear pair. In other words, there are two gears in a power transmission path from the engine 1 to the wheel end 5. The first gear pair corresponds to a first gear, and the first gear pair has a larger gear ratio, and can provide a relatively large torque to the wheel end 5. The second gear pair corresponds to a second gear, and the second gear pair has a smaller gear ratio, and can provide a relatively large rotation speed to the wheel end 5. The engine 1 may drive the wheel end 5 at two different gears to expand a high-efficiency area in which the engine 1 works, thereby meeting a fuel economy requirement of the entire vehicle.

In some embodiments of the present disclosure, referring to FIG. 1, in a radial direction of the first coupling apparatus 23, an orthographic projection of the first coupling apparatus 23 and an orthographic projection of the second coupling apparatus 33 have an overlapping area. In other words, the second coupling apparatus 33 and the first coupling apparatus 23 are at least partially opposite to each other in radial directions of the second coupling apparatus 33 and the first coupling apparatus 23, to reduce overall space occupied by the second coupling apparatus 33 and the first coupling apparatus 23 in axial directions of the first shaft 2 and the second shaft 3, thereby helping reduce an axial size of the transmission, and facilitating arrangement of the transmission in the vehicle.

In some embodiments of the present disclosure, referring to FIG. 1, the first shaft 2 and the second shaft 3 are arranged in parallel with each other. Both the first shaft 2 and the second shaft 3 extend along a Y (left and right) direction of the vehicle. The first shaft 2 and the second shaft 3 are spaced apart from each other along an X (front and back) direction of the vehicle. The second coupling apparatus 33 and the first coupling apparatus 23 may be at least partially opposite to each other along the X direction of the vehicle, to reduce overall space occupied by the second coupling apparatus 33 and the first coupling apparatus 23 along the Y direction of the vehicle, thereby reducing axial lengths of the first shaft 2 and the second shaft 3. The second coupling apparatus 33 and the first coupling apparatus 23 may be further at least partially opposite to each other along a Z (up and down) direction of the vehicle, to reduce overall space occupied by the second coupling apparatus 33 and the first coupling apparatus 23 along the Z direction of the vehicle. Therefore, the transmission according to this embodiment of the present disclosure has more compact space along an X-Z direction.

In some embodiments of the present disclosure, referring to FIG. 1, the second coupling apparatus 33 is located between the first gear member 31 and the third gear 32, and the first coupling apparatus 23 is located between the second gear 21 and the fourth gear 22. In other words, both the second coupling apparatus 33 and the first coupling apparatus 23 are located between the first gear pair and the second gear pair, to improve spatial utilization of the second coupling apparatus 33 and the first coupling apparatus 23 in the transmission, reduce a size of the transmission in the axial directions of the first shaft 2 and the second shaft 3, and increase integration of the transmission.

In some embodiments of the present disclosure, the engine 1 is an Atkinson engine 1, and the engine 1 has high efficiency and fuel economy. The second coupling apparatus 33 and the first coupling apparatus 23 are each a wet multi-plate clutch, which has advantages of high torque transmission capability, stable performance, fast response, and the like.

In some embodiments of the present disclosure, referring to FIG. 1, an outer side of the first shaft 2 is adapted to sleeve the first motor shaft 41, to improve integration between the first motor 4 and the transmission by fully using axial space on the first shaft 2. In addition, the first motor 4 and the first gear member 31 are disposed on different shafts, to facilitate arrangement of a gear set in a transmission path from the first motor 4 to the first gear member 31, to adjust a transmission ratio between the first gear member 31 and the first motor shaft 41, so that the engine 1 can satisfy a gear ratio required for power generation of the first motor 4, thereby improving power generation efficiency of a first generator.

In some embodiments of the present disclosure, referring to FIG. 1, the first gear member 31 is a dual gear, and the dual gear includes a first sub-gear 311 and a second sub-gear 312. The first sub-gear 311 meshes with the fourth gear 22, and the second sub-gear 312 is adapted to be drivingly connected to the first motor shaft 41. In other words, the second sub-gear 312 is fastened to the first sub-gear 311 and is drivingly connected to the first motor shaft 41. When the first sub-gear 311 rotates, the first sub-gear 311 drives the second sub-gear 312 to rotate synchronously. A gear quantity ratio between the second sub-gear 312 and the first sub-gear 311 may be set, to enable the engine 1 to satisfy the gear ratio required for power generation of the first motor 4.

Referring to FIG. 1, a sixth gear 42 is fixedly disposed on the first motor shaft 41, and the sixth gear 42 meshes with the second sub-gear 312 to drive. When the engine 1 drives the first motor 4 to generate power, power output by the engine 1 may sequentially pass through the first shaft 2, the fourth gear 22, the first sub-gear 311, the second sub-gear 312, and the sixth gear 42, and then drives the first motor shaft 41 to rotate.

Referring to FIG. 1, a seventh gear 35 is fixedly disposed on the second shaft 3, and a differential 6 and an eighth gear 7 are further disposed between the second shaft 3 and the wheel end 5. The differential 6 is drivingly connected between the wheel end 5 and the second shaft 3. The wheel end 5 of the vehicle includes a left wheel, a right wheel, a left half shaft drivingly connected between the differential 6 and the left wheel, and a right half shaft connected between the differential 6 and the right wheel. The eighth gear 7 is drivingly connected between the seventh gear 35 and the differential 6. The second shaft 3 may drive, through the seventh gear 35, the eighth gear 7 to rotate, so that the eighth gear 7 drives, through the differential 6, the left half shaft and the left wheel to rotate, and drives the right half shaft and the right wheel to rotate. The differential 6 may drive the left half shaft and the right half shaft of the vehicle to be in differential rotation.

In some embodiments of the present disclosure, referring to FIG. 1, a second motor shaft 81 of a second motor 8 is drivingly connected to the wheel end 5. In other words, the second motor 8 may transmit power to the wheel end 5 to drive the vehicle to travel. In addition, when the wheel end 5 decelerates or brakes, the wheel end 5 may drive the second motor shaft 81 to rotate, so that the second motor 8 generates power, thereby implementing regenerative power generation of the vehicle.

It will be noted that, the second motor shaft 81 may be directly drivingly connected to the wheel end 5, or the second motor shaft 81 may be indirectly drivingly connected to the wheel end 5 through one of the second shaft 3, the eighth gear 7, and the differential 6.

Referring to FIG. 1, the second shaft 3 is adapted to be drivingly connected to the second motor shaft 81 of the second motor 8, to implement a driving connection between the second motor shaft 81 and the wheel end 5 through the second shaft 3. In other words, the second motor 8 may drive, through the second motor shaft 81, the second shaft 3 to rotate, and further transmit power to the wheel end 5 through the second shaft 3, to drive the vehicle to travel. In addition, when the wheel end 5 decelerates or brakes, the wheel end 5 may drive, through the second shaft 3, the second motor shaft 81 to rotate, so that the second motor 8 generates power, thereby implementing regenerative power generation of the vehicle.

Referring to FIG. 1, the third gear 32 is adapted to mesh with a ninth gear 82 of the second motor shaft 81. The ninth gear 82 is fixedly disposed on the second motor shaft 81 of the second motor 8, and the ninth gear 82 meshes with the third gear 32, to implement a driving connection between the second motor shaft 81 and the second shaft 3. In addition, the third gear 32 may transmit power of the engine 1 and the second motor 8, to implement a dual-use function of the third gear 32. This helps reduce costs of the transmission and reduce space occupied by the transmission, thereby helping implement miniaturization of the transmission.

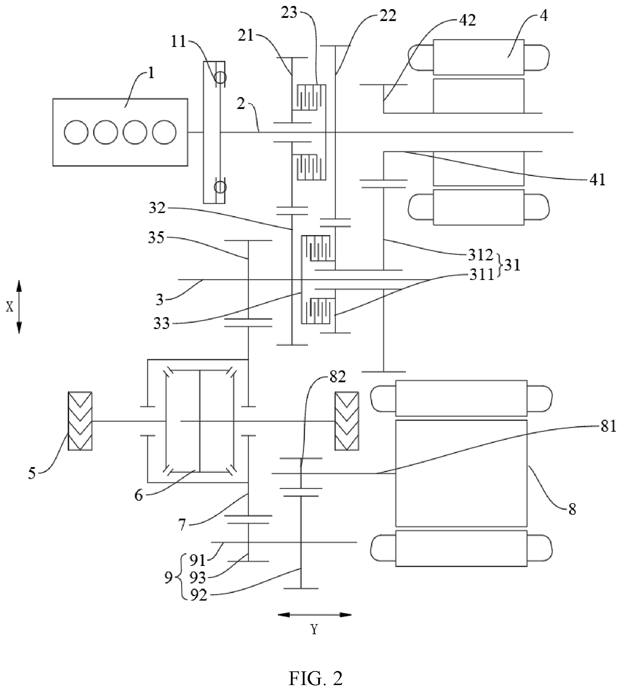

In some other embodiments of the present disclosure, referring to FIG. 2, the powertrain system of the vehicle further includes a transmission assembly 9. The transmission assembly 9 is drivingly connected between the second motor shaft 81 and the wheel end 5, and the transmission assembly 9 may be configured to adjust a transmission ratio between the second motor 8 and the wheel end 5, so that the second motor 8 can work in a high-efficiency range.

Referring to FIG. 2, the second motor shaft 81 of the second motor 8 is drivingly connected to the eighth gear 7 through the transmission assembly 9. The ninth gear 82 is fixedly disposed on the second motor shaft 81 of the second motor 8, the transmission assembly 9 includes a third shaft 91, and a tenth gear 92 and an eleventh gear 93 are fixedly disposed on the third shaft 91. The tenth gear 92 meshes with the ninth gear 82, and the eleventh gear 93 meshes with the eighth gear 7. This design may further reduce an axial size. In addition, power (size) of the first motor 4 may be made larger, thereby helping improve power performance of the first motor 4.

According to a powertrain system in an embodiment of a second aspect of the present disclosure, as shown in FIG. 1, the powertrain system includes a transmission, an engine 1, and a first motor 4. The transmission is the transmission in the foregoing embodiment, the engine 1 is drivingly connected to the first shaft 2, and a first motor shaft 41 of the first motor 4 is drivingly connected to the first gear member 31.

According to the powertrain system in this embodiment of the present disclosure, the first gear member 31 of the transmission of the powertrain system is drivingly connected to the first shaft 2, the first gear member 31 is drivingly connected to the first motor shaft 41 of the first motor 4, and the first gear member 31 is further selectively drivingly connected to the second shaft 3, so that the first gear member 31 can be used as both a speed gear of the engine 1 and a power generation gear. This helps reduce costs of the powertrain system and reduce space occupied by the powertrain system, thereby helping implement miniaturization of the powertrain system, and facilitating arrangement of the powertrain system in a vehicle.

In some embodiments of the present disclosure, referring to FIG. 1, the powertrain system further includes: a second motor 8, where a second motor shaft 81 of the second motor 8 is drivingly connected to the second shaft 3. In other words, the second motor 8 may transmit power to the wheel end 5 to drive the vehicle to travel. In addition, when the wheel end 5 decelerates or brakes, the wheel end 5 may drive the second motor shaft 81 to rotate, so that the second motor 8 generates power, thereby implementing regenerative power generation of the vehicle.

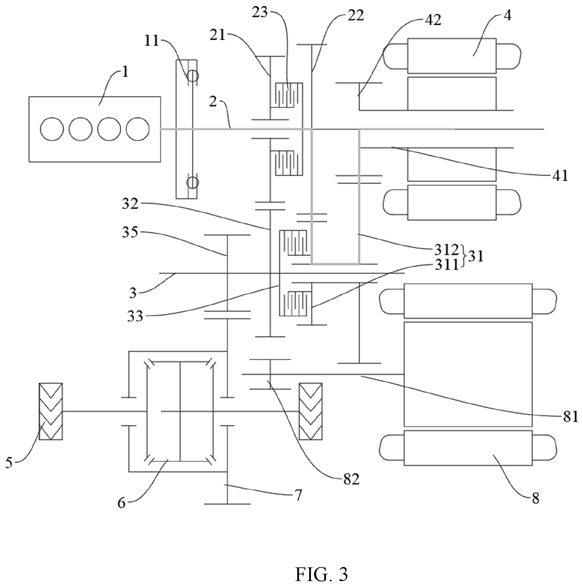

Referring to FIG. 3 to FIG. 8, when the transmission of the vehicle according to the embodiments of the present disclosure is used in the powertrain system of the vehicle, the powertrain system has at least the following working modes: a stationary power generation mode, a pure electric mode, a parallel first-gear mode, a parallel second-gear mode, a series mode, and a regenerative power generation mode.

Referring to FIG. 3, in the stationary power generation mode, both the second coupling apparatus 33 and the first coupling apparatus 23 are in the disengaged state. The first motor 4 first serves as a starting motor to drive the engine 1 to start, and then the first motor 4 serves as a generator. Power output by the engine 1 sequentially passes through the shock absorption apparatus 11, the first shaft 2, the fourth gear 22, the first gear member 31, and the sixth gear 42, and then drives the first motor shaft 41 to rotate, so that the engine 1 drives the first motor 4 to generate power, thereby charging the battery 40 of the vehicle. The stationary power generation mode is applicable to a case in which the vehicle is in a parked state and the battery 40 has a low charge.

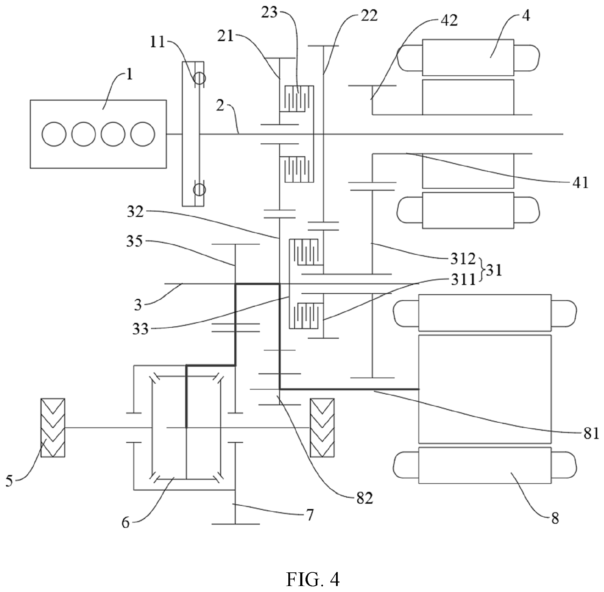

Referring to FIG. 4, in the pure electric mode, both the second coupling apparatus 33 and the first coupling apparatus 23 are in the disengaged state. The second motor 8 serves as a drive motor, and the second motor 8 is powered on. Power output by the second motor 8 sequentially passes through the second motor shaft 81, the ninth gear 82, the third gear 32, the second shaft 3, the seventh gear 35, and the eighth gear 7, and is then transmitted to the wheel end 5 through the differential 6. In this way, the second motor 8 drives the wheel end 5. The pure electric mode is applicable to a case in which the battery 40 of the vehicle has a sufficient charge. In this case, the engine 1 is in a shutdown state, and the first motor 4 drives a wheel through a plurality of stages of reduction gears, a transmission ratio is large, and the vehicle has good power performance.

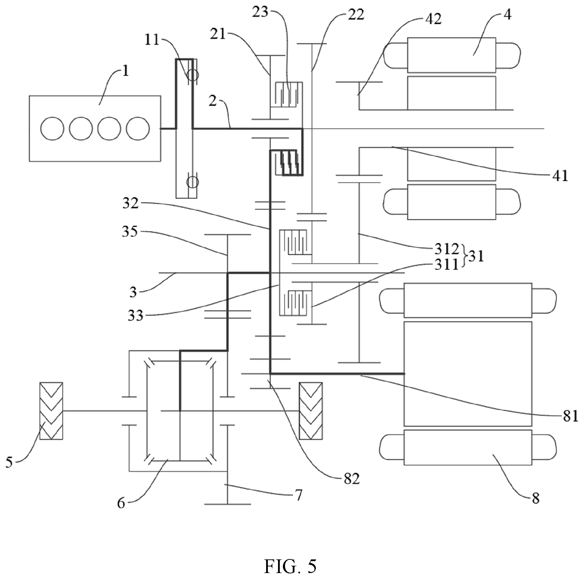

Referring to FIG. 5, in the parallel first-gear mode, the second coupling apparatus 33 is in the disengaged state, and the first coupling apparatus 23 is in the engaged state. In one aspect, the engine 1 is started, and power output by the engine 1 is transmitted to the third gear 32 sequentially through the shock absorption apparatus 11, the first shaft 2, the first coupling apparatus 23, and the second gear 21. In another aspect, power output by the second motor 8 is transmitted to the third gear 32 sequentially through the second motor shaft 81 and the ninth gear 82. The power output by the engine 1 and the power output by the second motor 8 converge on the third gear 32, then sequentially pass through the second shaft 3, the seventh gear 35, and the eighth gear 7, and are then transmitted to the wheel end 5 through the differential 6, to form dual-power parallel drive by the engine 1 and the second motor 8. In addition, the power from the engine 1 is transmitted to the second shaft 3 through the first gear pair (the second gear 21 and the third gear 32). A speed decrease and a torque increase in power transmission can be achieved from the second gear 21 to the third gear 32, from the ninth gear 82 to the third gear 32, and from the seventh gear 35 to the eighth gear 7.

The parallel first-gear mode is applicable to a condition that a charge of the battery 40 in a medium-to-high state, and the vehicle climbs a steep grade or needs to accelerate rapidly. In this case, the vehicle can obtain a maximum required torque. The vehicle is in a working state with a maximum driving force (acceleration), can overcome ramp resistance and air resistance to travel, and has good power performance. In addition, in a condition that the same driving force is required, an increase in a driving torque of the engine 1 can reduce a power requirement of the second motor 8, thereby effectively reducing workload of the second motor 8. In this case, working voltage and current of the second motor 8 are reduced, thereby reducing power consumption of the second motor 8 caused by copper loss in an extreme condition, and reducing electrical energy loss of the second motor 8.

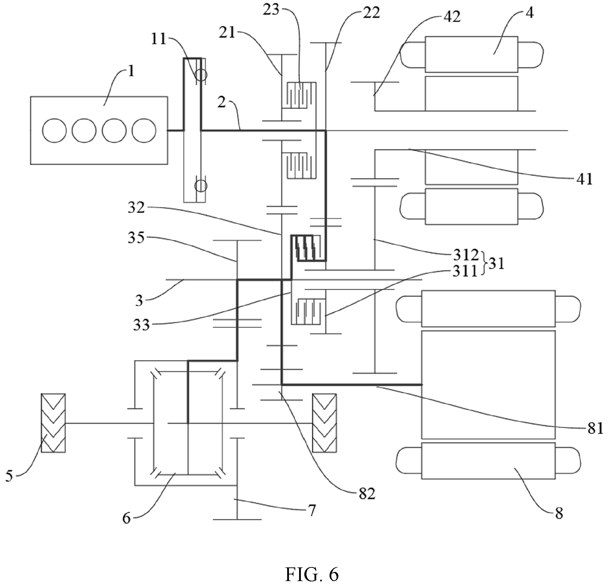

Referring to FIG. 6, in the parallel second-gear mode, the second coupling apparatus 33 is in the engaged state, and the first coupling apparatus 23 is in the disengaged state. In one aspect, the engine 1 is started, and power output by the engine 1 is transmitted to the second shaft 3 sequentially through the shock absorption apparatus 11, the first shaft 2, the fourth gear 22, the first gear member 31, and the second coupling apparatus 33. In another aspect, power output by the second motor 8 is transmitted to the second shaft 3 sequentially through the second motor shaft 81, the ninth gear 82, and the third gear 32. The power output by the engine 1 and the power output by the second motor 8 converge on the second shaft 3, and are then transmitted to the wheel end 5 sequentially through the seventh gear 35, the eighth gear 7, and the differential 6, to form dual-power parallel drive by the engine 1 and the second motor 8. In addition, the power from the engine 1 is transmitted to the second shaft 3 through the second gear pair (the fourth gear 22 and the first gear member 31), to implement economical parallel drive by the engine 1 and the second motor 8. A speed increase and a torque decrease in power transmission can be achieved from the fourth gear 22 to the first gear member 31.

The parallel second-gear mode is applicable to a condition that a charge of the battery 40 is in a medium-to-high state, and the vehicle is in a high-speed cruising condition. In this case, the wheel end 5 has a small driving force requirement and a high rotation speed requirement. A second-gear torque of the engine 1 and a torque of the second motor 8 are superposed on the second shaft 3, then undergo another speed decrease and torque increase through the eighth gear 7, and then reach the differential 6. The differential 6 drives a drive shaft of the wheel end 5 to work. In this case, due to a speed increase through the second gear pair, a rotation speed requirement of the engine 1 is lower than a rotation speed requirement in the first-gear condition, although the engine 1 does not have a driving force as large as that in the first-gear state, so that the engine 1 can work in a rotation speed range of a high-efficiency area, thereby achieving better fuel economy. In addition, in the condition that the vehicle is in the high-speed cruising condition, the engine 1 participates in driving the wheel end 5 in a second-gear state, which can effectively reduce rotation speed dependence on the second motor 8, thereby reducing heat loss occurred in the motor, and saving electrical energy.

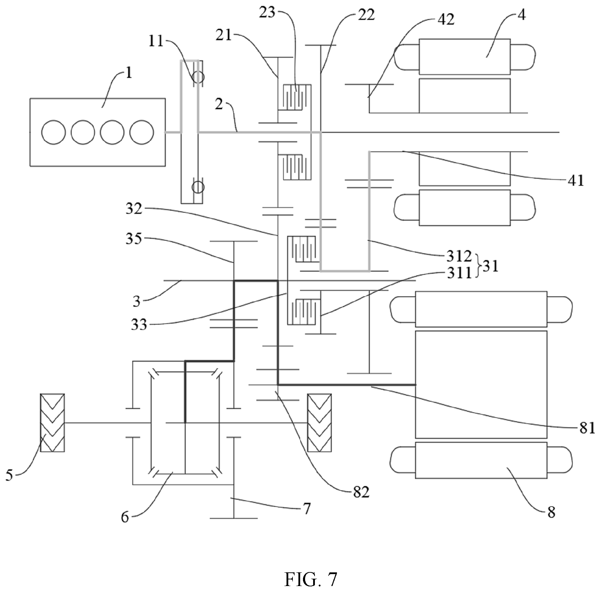

Referring to FIG. 7, in the series mode, both the second coupling apparatus 33 and the first coupling apparatus 23 are in the disengaged state. The first motor 4 first serves as a starting motor to drive the engine 1 to start, and then the first motor 4 serves as a generator. Power output by the engine 1 sequentially passes through the shock absorption apparatus 11, the first shaft 2, the fourth gear 22, the first gear member 31, and the sixth gear 42, and then drives the first motor shaft 41 to rotate, so that the engine 1 drives the first motor 4 to generate power. In addition, the second motor 8 is powered on, and power output by the second motor 8 sequentially passes through the second motor shaft 81, the ninth gear 82, the third gear 32, the second shaft 3, the seventh gear 35, and the eighth gear 7, and is then transmitted to the wheel end 5 through the differential 6, so that the second motor 8 drives the wheel end 5. Electrical energy generated by the first motor 4 may be supplied to at least one of the second motor 8 and the battery 40. In other words, the electrical energy generated by the first motor 4 may be supplied to the battery 40, to supplement electrical energy of the battery 40. The electrical energy generated by the first motor 4 may be supplied to the second motor 8, to ensure that the second motor 8 can satisfy required power of the vehicle. The electrical energy generated by the first motor 4 may alternatively be simultaneously supplied to the battery 40 and the second motor 8, to avoid wasting output power of the engine 1.

The series mode is applicable to a condition that a charge of the battery 40 is in a medium-to-low state. The engine 1 can work in a rotation speed range of a high-efficiency area to drive the first motor 4 to generate power. The electrical energy generated by the first motor 4 is supplied to the second motor 8, or the electrical energy generated by the first motor 4 is supplied to the battery 40, or the electrical energy generated by the first motor 4 is supplied to the second motor 8 and the battery 40. After receiving the electrical energy, the second motor 8 outputs a driving force based on an external characteristic curve of the motor.

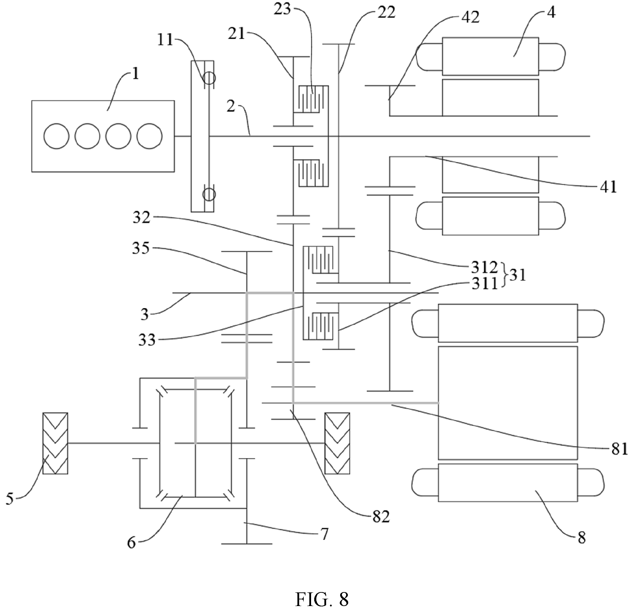

Referring to FIG. 8, in the regenerative power generation mode, both the second coupling apparatus 33 and the first coupling apparatus 23 are in the disengaged state, and the vehicle is in a deceleration or braking condition. A driving force of the wheel end 5 is transmitted to the second motor shaft 81 through the differential 6, the eighth gear 7, the seventh gear 35, the second shaft 3, the third gear 32, and the ninth gear 82, so that the second motor 8 generates power, and the second motor 8 can supply power to the battery 40.

According to the powertrain system of the vehicle in this embodiment of the present disclosure, the second coupling apparatus 33 is disposed on the second shaft 3, and the first coupling apparatus 23 is disposed on the first shaft 2. The second coupling apparatus 33 and the first coupling apparatus 23 are designed on different shafts. In addition, the second coupling apparatus 33 and the first coupling apparatus 23 may be arranged in a back-crossed staggered configuration, and the second coupling apparatus 33 and the first coupling apparatus 23 overlap in axial space. Axial space occupied by the two clutches is basically the same as axial space occupied by one clutch. Such a design can implement two gears of the engine 1, and an axial size of the powertrain system does not increase due to an increase in a quantity of gears, thereby facilitating layout of the powertrain system in a compartment of the engine 1. In addition, in the same case of implementing two gears, compared with a solution with one clutch and one synchronizer, the two-clutch solution in this embodiment of the present disclosure eliminates a need for a synchronizer shifting actuator and a shifting motor. On the premise that a two-gear mode of the engine 1 can be implemented, the two-clutch solution only requires addition of one hydraulic oil circuit, resulting in a simpler structure and lower cost.

In addition, the first gear member 31 has a dual-use function. The first gear member 31 can be used not only as a speed gear of the engine 1, but also as a power generation gear, thereby implementing a plurality of functions of the same component.

In addition, according to the powertrain system of the vehicle in this embodiment of the present disclosure, the embodiment shown in FIG. 1 is a four-shaft design. A configuration in which the engine 1 is coaxial with the first motor 4 is used, and the first motor shaft 41 is movably sleeved on the first shaft 2. Compared with a powertrain system design with a five-shaft configuration in the conventional technologies, the four-shaft design offers more compact space in an X-Z direction.

In addition, switching of a working mode in different scenarios may be implemented by using a method for controlling a vehicle, so that the engine 1 and the second motor 8 always work in a high-efficiency range, to balance power performance and economy. In addition, when the engine 1 is connected in parallel with the first motor 4, switching between two gears can reduce a vehicle speed interfered with by the engine 1, to enable the vehicle to have better low-speed power performance. Moreover, the switching can further reduce a load of the first motor 4 at a medium-to-high speed, expand a high-efficiency traveling area of the engine 1, and improve running efficiency of a hybrid powertrain system in a medium-to-high speed condition, and therefore is more efficient and fuel-saving than a single-gear hybrid power architecture.

A vehicle according to an embodiment of a third aspect of the present disclosure includes the foregoing powertrain system of the vehicle.

According to the vehicle in this embodiment of the present disclosure, the first gear member 31 of the transmission of the vehicle is drivingly connected to the first shaft 2, the first gear member 31 is drivingly connected to the first motor shaft 41 of the first motor 4, and the first gear member 31 is further selectively drivingly connected to the second shaft 3, so that the first gear member 31 can be used as both a speed gear of the engine 1 and a power generation gear. This helps reduce costs of the powertrain system and reduce space occupied by the powertrain system, thereby helping implement miniaturization of the powertrain system, and facilitating arrangement of the powertrain system in a vehicle.

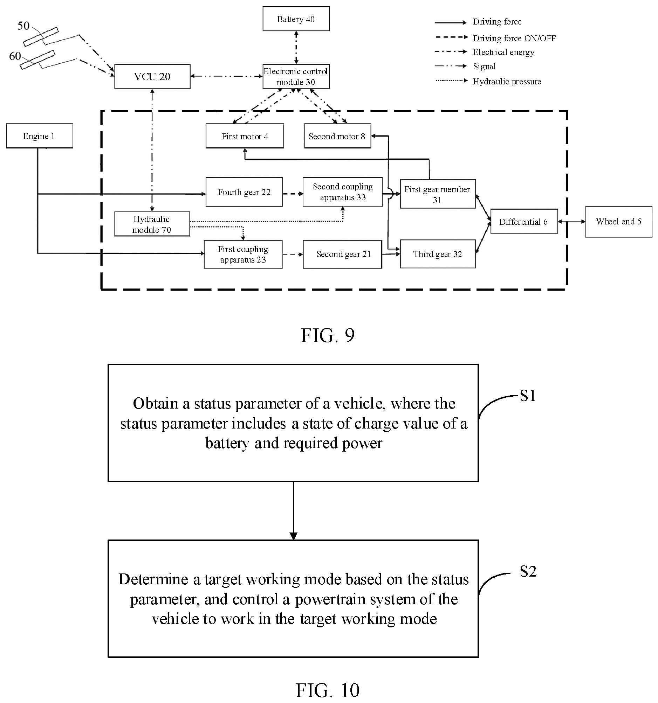

In some embodiments of the present disclosure, referring to FIG. 9, the powertrain system has a hydraulic module 70 that controls states of the second coupling apparatus 33 and the first coupling apparatus 23. The vehicle further includes a VCU (vehicle control unit) 20, an electronic control module 30, a battery 40, an accelerator pedal 50, and a brake pedal 60. The VCU 20 is separately communicatively connected to the hydraulic module 70, the accelerator pedal 50, the brake pedal 60, and the electronic control module 30. The electronic control module 30 is separately electrically connected to the battery 40, the first motor 4, and the second motor 8. In addition, the VCU 20 may be further communicatively connected to a vehicle speed sensor. The VCU 20 may determine a driving intention of a driver and calculate a power requirement of a transmission system (the transmission system is mainly composed of components in a dashed-line rectangular box in FIG. 9) based on a vehicle speed, an opening degree signal of the accelerator pedal 50, and an opening degree signal of the brake pedal 60 in combination with the electronic control module 30. The electronic control module 30 performs comprehensive determining based on a current state of charge value (SOC, State of Charge) of the battery 40. The VCU 20 determines a target working mode, and controls the powertrain system of the vehicle to work in the target working mode. The VCU 20 may connect a hydraulic oil circuit of the second coupling apparatus 33 through the hydraulic module 70, to engage the second coupling apparatus 33. The VCU 20 may further connect to a hydraulic oil circuit of the first coupling apparatus 23 through the hydraulic module 70, to engage the first coupling apparatus 23.

When the vehicle is in a parking-start state, the VCU 20 performs determining based on the state of charge value of the battery 40 and a specified power reservation value. When the state of charge value of the battery 40 reaches a lowest value (for example, 25%), the engine 1 is started and drives the first motor 4 to perform power generation, and an alternating current is converted into a direct current through the electronic control module 30 and the direct current is stored in the battery 40. In this case, the second coupling apparatus 33 is not engaged with the first coupling apparatus 23, and the second motor 8 is in a shutdown state, so that the powertrain system of the vehicle works in the stationary power generation mode.

When the state of charge value of the battery 40 is relatively high and is greater than a specified value (for example, 75%), the VCU 20 detects that an opening degree of an accelerator is a medium-to-low opening degree, and required power of the powertrain system is less than or equal to rated output power of the first motor 4. When the vehicle starts or travels on an urban street, the electronic control module 30 converts a direct current supplied by the battery 40 into an alternating current, boosts the alternating current, and then transmits the boosted alternating current to the second motor 8 to drive the second motor 8 to work. The second motor 8 outputs a torque based on the external characteristic curve of the motor, to drive the vehicle to overcome resistance to travel, so that the powertrain system of the vehicle works in the pure electric mode. In this case, the first motor 4 serves as a power source to convert electrical energy of the battery 40 into mechanical energy, and outputs the mechanical energy for working. In a medium-to-low speed condition of the vehicle, the first motor 4 has better economy and power performance than the first engine 1, thereby ensuring a large-torque acceleration requirement in a starting phase while saving fuel.

When the state of charge value of the battery 40 is greater than the lowest value (for example, 25%) and the specified power reservation value (for example, 50%), in a condition that the vehicle climbs a steep grade or needs to accelerate rapidly, power performance of the vehicle does not satisfy a requirement, that is, required power of the powertrain system is greater than the rated output power of the first motor 4. The VCU 20 controls, by using an electric control system, the first motor 4 to work in reverse, to start the engine 1. The VCU 20 controls a related valve body of the hydraulic module 70 in the transmission system to open, and the oil circuit of the first coupling apparatus 23 is connected, to engage the first coupling apparatus 23. In addition, a rotation speed difference (for example, ≤50 rpm) between a shaft of the engine 1 and the second shaft 3 is adjusted. In this case, the engine 1 jointly drives, at a first gear (low gear), the vehicle in parallel with the first motor 4, to satisfy a power performance requirement in a large load condition, so that the powertrain system of the vehicle works in the parallel first-gear mode. When the vehicle recovers to a small load condition or a slow acceleration condition, required power of the drive system is less than rated output power of the second motor 8, and the engine 1 may stop working. In this case, the vehicle returns to the foregoing pure electric mode.

When the state of charge value of the battery 40 is greater than the lowest value (for example, 25%) and the specified power reservation value (for example, 50%), in a condition that the vehicle travels on a highway and has small resistance, and requires a relatively small driving force and a relatively large rotation speed, if power performance of the vehicle satisfies a requirement, that is, required power of the powertrain system is less than output power of the second motor 8, the VCU 20 controls the electronic control module 30 to adjust rotation speeds of the first shaft 2 and the second shaft 3, and controls a gear oil circuit in the hydraulic module 70 to work, so that the oil circuit of the first coupling apparatus 23 is disconnected, the oil circuit of the second coupling apparatus 33 is connected, and the second coupling apparatus 33 is engaged. In this case, the engine 1 jointly drives, at a second gear (high gear), the vehicle in parallel with the second motor 8, so that the powertrain system of the vehicle works in the parallel second-gear mode. In this case, the engine 1 works in a high-efficiency area to meet a fuel economy requirement of the entire vehicle.

When the vehicle is driven by the second motor 8, the state of charge value of the battery 40 reaches a lowest specified value (for example, 25%), and required power of the powertrain system is less than or equal to rated output power of the second motor 8, the engine 1 starts to work again to drive the first motor 4 to generate power, so that the powertrain system of the vehicle works in the series mode.

In some embodiments of the present disclosure, a gear ratio range of the engine 1 at a direct-drive first-gear (low gear) is 4.3 to 5.5, and a gear ratio range of the engine 1 in a direct-drive second-gear (high gear) is 2.3 to 3.5. When a vehicle speed reaches a second preset vehicle speed threshold (for example, 45 km/h), the vehicle may switch from the series mode to a direct-drive first-gear (low gear) mode. In this case, the second motor 8 stops working, and the engine 1 works in a high-efficiency working range and directly drives the vehicle to run. To be specific, power output by the engine 1 sequentially passes through the shock absorption apparatus 11, the first shaft 2, the first coupling apparatus 23, the second gear 21, the third gear 32, the second shaft 3, the seventh gear 35, and the eighth gear 7, and is then transmitted to the wheel end 5 through the differential 6, to avoid energy conversion in the series mode, thereby improving fuel economy of the vehicle. When the vehicle continues to accelerate to a first preset vehicle speed threshold (for example, 85 km/h), the VCU 20 switches the first coupling apparatus 23 to the second coupling apparatus 33 by controlling the hydraulic module 70. In the switching process, the VCU 20 may control rotation speeds and torques of the engine 1, the first motor 4, and the second motor 8 to ensure a smooth torque change and eliminate power interruption during clutch switching, thereby implementing a smooth engagement. In this case, the engine 1 switches from the direct-drive first-gear (low gear) mode to the direct-drive second-gear (high gear) mode, and power output by the engine sequentially passes through the shock absorption apparatus 11, the first shaft 2, the fourth gear 22, the first gear member 31, the second coupling apparatus 33, the second shaft 3, the seventh gear 35, the eighth gear 7, and is then transmitted to the wheel end 5 through the differential 6. In this case, although the vehicle speed increases, the engine 1 still works in a working range with an efficient and economical rotation speed. Compared with a single-gear hybrid system, this significantly improves fuel economy of the vehicle.

When the vehicle is in the direct-drive second-gear mode, if the vehicle needs to accelerate for overtaking, and required power of the powertrain system is greater than output power of the engine 1, in this case, the direct-drive second-gear mode of the engine 1 is switched to the first-gear mode, and the second motor 8 may participate in driving of the wheel end 5, so that the powertrain system of the vehicle switches to the parallel first-gear mode, thereby improving power performance of the entire vehicle.

It will be noted that, the VCU 20 may intelligently choose to switch the powertrain system of the vehicle between the modes, and the engine 1 can always remain in a highest efficiency area. At a medium-to-low speed, the VCU 20 intelligently selects the pure electric mode (EV) or the series mode based on a state of SOC setting value. In a case of a medium-to-high speed, rapid acceleration, or climbing a steep grade with a heavy accelerator, the VCU 20 selects the parallel first-gear. In a high-speed cruising condition, the wheel end 5 needs a large rotation speed and a small torque, and the VCU 20 selects the parallel second-gear. In each working mode, high efficiency of the powertrain system is always maintained, to expand a high-efficiency area of the engine 1, thereby reducing a load of the second motor 8 in a low-efficiency area. In addition, when power performance is required, the engine 1 works at a first-gear to provide assistance to make a good power response. In summary, direct drive provides highest efficiency in the high-speed cruising condition, and high power responsiveness can be provided in a parallel high-load condition.

According to the vehicle in this embodiment of the present disclosure, switching between the two clutches can be well implemented based on a power requirement in a condition, a vehicle speed, and the like, and in cooperate with high and low gears having proper gear ratios, the engine 1 is enabled to work in a high-efficiency area as much as possible, thereby improving power performance and economy of the vehicle. In addition, during upshifting and downshifting, a rotation speed and a torque of the engine 1 are controlled and calibrated to minimize clutch engagement time, minimize shift shock, and minimize clutch slippage work, thereby ensuring a smooth change of an output torque. There is no power interruption in a shifting process, and NVH performance of the entire vehicle is good.

A method for controlling a vehicle according to an embodiment of a fourth aspect of the present disclosure is applied to the foregoing powertrain system of a vehicle. Referring to FIG. 10, the method includes the following steps:
Step S1: obtain a status parameter of a vehicle, where the status parameter includes a state of charge value of a battery and required power.

A state of charge value of the battery is an SOC value of the battery of the vehicle, that is, a remaining charge of the battery. The required power is power of the powertrain system acting on the wheel end, and the required power may reflect a driving intention of a driver. When the driver presses an accelerator pedal, the required power is a positive value, and the powertrain system can drive the wheel end. A depth of the accelerator pedal is positively related to the required power. When the driver presses a brake pedal, the required power is a negative value, and the powertrain system can brake on the wheel end. A depth of the brake pedal is negatively related to the required power.

Step S2: determine a target working mode based on the status parameter, and control a powertrain system of the vehicle to work in the target working mode.

According to the method for controlling a vehicle in this embodiment of the present disclosure, the target working mode may be determined based on the status parameter of the vehicle such as the state of charge value of the battery and the required power, and the powertrain system of the vehicle is controlled to work in the target working mode, to meet a driving intention of a driver, thereby implementing intelligent control of the vehicle.

In some embodiments of the present disclosure, the status parameter further includes a vehicle speed, and that the target working mode is determined based on the status parameter includes: if the state of charge value of the battery is less than or equal to a first preset threshold, the required power is equal to zero, and the vehicle speed is equal to zero, determining that the target working mode is a stationary power generation mode.

The first preset threshold may be 25%. When the state of charge value of the battery is less than or equal to the first preset threshold, a battery charge of the vehicle is relatively low. When the required power is equal to zero and the vehicle speed is equal to zero, the vehicle is in a parking-start state. In this case, it is determined that the target working mode is the stationary power generation mode, which helps supplement the battery charge in a timely way.

In some embodiments of the present disclosure, when the target working mode is the stationary power generation mode, that the powertrain system of the vehicle is controlled to work in the target working mode includes: controlling the engine to drive the first motor to generate power, to charge the battery of the vehicle. To be specific, power output by the engine may be transmitted to the first motor shaft sequentially through the first shaft and the first gear member, to drive the first motor shaft to rotate, so that the first motor generates power, to charge the battery of the vehicle. In this case, because the engine drives only the first motor shaft to rotate, the engine may work in a high-efficiency working range, and indicators such as efficiency and fuel consumption of the engine reach an ideal state, thereby improving fuel economy of the vehicle, and reducing overall energy consumption of the vehicle.

In some embodiments of the present disclosure, the powertrain system of the vehicle further includes a second motor, and a second motor shaft of the second motor is drivingly connected to the wheel end. That the target working mode is determined based on the status parameter includes: if the state of charge value of the battery is greater than a second preset threshold, the required power is greater than zero and is less than or equal to rated output power of the second motor, and the vehicle speed is less than or equal to a first preset vehicle speed threshold, determining that the target working mode is a pure electric mode. The second preset threshold is greater than the first preset threshold, the second preset threshold may be 75%, and the first preset vehicle speed threshold may be 85 km/h.

It will be understood that, when the state of charge value of the battery is greater than the second preset threshold, a battery charge of the vehicle is sufficient. When the required power is greater than zero and is less than or equal to the rated output power of the second motor, the second motor can meet the required power of the vehicle. When the vehicle speed is less than or equal to the first preset vehicle speed threshold, the vehicle speed does not reach a state of a high-speed area of the second motor, and heat loss of the second motor is small. In this case, it is determined that the target working mode is the pure electric mode, which helps drive the vehicle by using a high-efficiency working range of the second motor, so that the vehicle has good power performance.

In some embodiments of the present disclosure, when the target working mode is the pure electric mode, that the powertrain system of the vehicle is controlled to work in the target working mode includes: controlling, based on the required power, the second motor to drive the wheel end, so that when electrical energy of the battery of the vehicle is sufficient, the second motor consumes the electrical energy of the battery of the vehicle to drive the wheel end. In this case, the engine is in a shutdown state, to reduce consumption of fossil energy by the vehicle.

In some embodiments of the present disclosure, that the target working mode is determined based on the status parameter includes: if the state of charge value of the battery is greater than a third preset threshold, the required power is greater than the rated output power of the second motor, and the vehicle speed is greater than a second preset vehicle speed threshold and is less than or equal to the first vehicle speed threshold, determining that the target working mode is a parallel first-gear mode. The third preset threshold is greater than the first preset threshold and is less than or equal to the second preset threshold, the third preset threshold may be a power reservation value set by a user, the third preset threshold may be 50%, the second preset vehicle speed threshold is less than the first vehicle speed threshold, and the second preset vehicle speed threshold may be 45 km/h.

It will be understood that, when the state of charge value of the battery is greater than the third preset threshold, a battery charge of the battery is in a medium-to-high state. When the required power is greater than the rated output power of the second motor, the second motor cannot meet the required power of the vehicle, and the engine may be started to increase output power of the powertrain system. When the vehicle speed is greater than the second preset vehicle speed threshold and is less than or equal to the first vehicle speed threshold, the engine may work in a high-efficiency working range in a first-gear mode. In this case, it is determined that the target working mode is determined as the parallel first-gear mode. In this way, the engine and the second motor are used to drive the wheel end in parallel to meet the required power, and the engine can work in a high-efficiency working range, thereby reducing overall energy consumption of the vehicle.

In some embodiments of the present disclosure, the powertrain system of the vehicle further includes a second coupling apparatus and a first coupling apparatus. A second gear is sleeved on the first shaft, and the second gear is selectively drivingly connected to the first shaft. A third gear meshes with the second gear is fixedly disposed on the second shaft, and a fourth gear meshes with the first gear member is fixedly disposed on the first shaft. The second gear and the third gear are configured as a first gear pair, the first gear member and the fourth gear are configured as a second gear pair, and a gear ratio of the first gear pair is greater than a gear ratio of the second gear pair. The second coupling apparatus is connected between the first gear member and the second shaft to selectively engage the first gear member and the second shaft, and the first coupling apparatus is connected between the second gear and the first shaft to selectively engage the second gear and the first shaft. The engine may drive the wheel end at two different gears, so that the engine works in a high-efficiency area, thereby meeting a fuel economy requirement of the entire vehicle.

When the target working mode is the parallel first-gear mode, that the powertrain system of the vehicle is controlled to work in the target working mode includes: controlling an oil circuit of the first coupling apparatus to be connected to engage the second gear and the first shaft, and based on the required power, controlling the engine to drive the wheel end through the first gear pair, and controlling the second motor to drive the wheel end. In other words, the second coupling apparatus is in a disengaged state, and the first coupling apparatus is in an engaged state. In one aspect, the engine is started, and power output by the engine is transmitted to the third gear sequentially through the shock absorption apparatus, the first shaft, the first coupling apparatus, and the second gear. In another aspect, power output by the second motor is transmitted to the third gear sequentially through the second motor shaft and the ninth gear. The power output by the engine and the power output by the second motor converge on the third gear, then sequentially pass through the second shaft, the seventh gear, and the eighth gear, and are then transmitted to the wheel end through the differential, to form dual-power parallel drive by the engine and the second motor. In this case, the vehicle is in a working state with a maximum driving force (acceleration), can overcome ramp resistance and air resistance to travel, and has good power performance. In addition, in a condition that the same driving force is required, an increase in a driving torque of the engine can reduce a power requirement of the second motor, thereby effectively reducing the workload of the second motor. In this case, the working voltage and current of the second motor are reduced, thereby reducing power consumption of the second motor caused by copper loss in an extreme condition, and reducing electrical energy loss of the second motor.

In some embodiments of the present disclosure, that the target working mode is determined based on the status parameter includes: if the state of charge value of the battery is greater than the third preset threshold, the required power is less than or equal to the rated output power of the second motor, and the vehicle speed is greater than the first preset vehicle speed threshold, determining that the target working mode is a parallel second-gear mode.

It will be understood that, when the state of charge value of the battery is greater than the third preset threshold, a battery charge is in the medium-to-high state. When the required power is less than or equal to the rated output power of the second motor, the second motor can meet the required power of the vehicle. When the vehicle speed is greater than the first preset vehicle speed threshold, the vehicle speed reaches the state of the high-speed area of the second motor. In this case, although the second motor can meet the required power of the vehicle, when the second motor provides driving in the high-speed area, heat loss is prone to occur. In this case, it is determined that the target working mode is the parallel second-gear mode. In this way, the engine and the second motor are used to drive the wheel end in parallel to meet the required power, to effectively reduce a rotation speed dependence on the second motor, and decrease power consumption of the second motor. In addition, the engine can work in a high-efficiency working range, thereby reducing overall energy consumption of the vehicle.

In some embodiments of the present disclosure, when the target working mode is the parallel second-gear mode, that the powertrain system of the vehicle is controlled to work in the target working mode includes: controlling an oil circuit of the second coupling apparatus to be connected to engage the first gear member and the second shaft, and based on the required power, controlling the engine to drive the wheel end through the second gear pair, and controlling the second motor to drive the wheel end. In other words, the second coupling apparatus is in the engaged state, and the first coupling apparatus is in the disengaged state. In one aspect, the engine is started, and power output by the engine is transmitted to the second shaft sequentially through the shock absorption apparatus, the first shaft, the fourth gear, the first gear member, and the second coupling apparatus. In another aspect, power output by the second motor is transmitted to the second shaft sequentially through the second motor shaft, the ninth gear, and the third gear. The power output by the engine and the power output by the second motor converge on the second shaft, and is then transmitted to the wheel end sequentially through the seventh gear, the eighth gear, and the differential, to form dual-power parallel drive by the engine and the second motor. In addition, the power from the engine is transmitted to the second shaft through the second gear pair (the fourth gear and the first gear member), to implement economical parallel drive by the engine and the second motor. The engine participates in driving the wheel end in a second-gear state, which can effectively reduce a rotation speed dependence on the second motor, thereby reducing heat loss occurred in the motor, and saving electrical energy.

In some embodiments of the present disclosure, that the target working mode is determined based on the status parameter includes: if the state of charge value of the battery is less than or equal to the first preset threshold, the required power is less than or equal to the rated output power of the second motor, and the vehicle speed is less than or equal to the second preset vehicle speed threshold, determining that the target working mode is a series mode.

It will be understood that, when the state of charge value of the battery is less than or equal to the first preset threshold, a battery charge of the vehicle is relatively low. When the required power is less than or equal to the rated output power of the second motor, the second motor can meet the required power of the vehicle. When the vehicle speed is less than the second preset vehicle speed threshold, the vehicle has a relatively small vehicle speed, and is in a starting phase. In this case, if the engine directly drives the wheel end, it is difficult for the engine to work in a high-efficiency working range. In this case, it is determined that the target working mode is the series mode, so that the engine generates power for the second motor to work, thereby reducing overall energy consumption of the vehicle.

In some embodiments of the present disclosure, when the target working mode is the series mode, that the powertrain system of the vehicle is controlled to work in the target working mode includes: controlling the engine to drive the first motor to generate power, to charge the battery of the vehicle, or to supply power to the second motor, or to charge the battery of the vehicle and supply power to the second motor; and controlling, based on the required power, the second motor to drive the wheel end. In other words, both the second coupling apparatus and the first coupling apparatus are in the disengaged state. The first motor first serves as a starting motor to drive the engine to start, and then the first motor serves as a generator. Power output by the engine sequentially passes through the shock absorption apparatus, the first shaft, the fourth gear, the first gear member, and the sixth gear, and then drives the first motor shaft to rotate, so that the engine drives the first motor to generate power. In addition, the second motor is powered on, and power output by the second motor sequentially passes through the second motor shaft, the ninth gear, the third gear, the second shaft, the seventh gear, and the eighth gear, and is then transmitted to the wheel end through the differential, so that the second motor drives the wheel end. Electrical energy generated by the first motor may be supplied to at least one of the second motor and the battery. In other words, the electrical energy generated by the first motor may be supplied to the battery, to supplement electrical energy of the battery. The electrical energy generated by the first motor may alternatively be supplied to the second motor, to ensure that the second motor can meet the required power of the vehicle. The electrical energy generated by the first motor may alternatively be simultaneously supplied to the battery and the second motor, to avoid wasting the output power of the engine.

In some embodiments of the present disclosure, that the target working mode is determined based on the status parameter includes: if the state of charge value of the battery is less than a fourth preset threshold, and the required power is less than zero, determining that the target working mode is a regenerative power generation mode.

The fourth preset threshold may be 100%. If the state of charge value of the battery is less than the fourth preset threshold, the battery is not in a fully charged state. When the required power is less than zero, the vehicle is in a deceleration or braking state. In this case, it is determined that the target working mode is the regenerative power generation mode, to generate power by using a deceleration or braking force at the wheel end, thereby implementing kinetic energy recovery.

In some embodiments of the present disclosure, the powertrain system of the vehicle further includes a second motor, and a second motor shaft of the second motor is drivingly connected to the wheel end. When the target working mode is regenerative power generation, that the powertrain system of the vehicle is controlled to work in the target working mode includes: controlling, based on the required power, the wheel end to drive the second motor to generate power, to charge the battery of the vehicle. In other words, both the second coupling apparatus and the first coupling apparatus are in the disengaged state. The vehicle is in the deceleration or braking condition, and a driving force of the wheel end is transmitted to the second motor shaft through the differential, the eighth gear, the seventh gear, the second shaft, the third gear, and the ninth gear, so that the second motor generates power, and the second motor can supply power to the battery.

In the description of this specification, descriptions referring to the terms "one embodiment", "some embodiments", "examples", "specific examples", or "some examples" mean that specific features, structures, materials, or characteristics described with reference to this embodiment or example are included in at least one embodiment or example of the present disclosure. In this specification, illustrative expressions of the foregoing terms do not necessarily refer to the same embodiment or example. Furthermore, the described specific features, structures, materials, or characteristics may be combined in any one or more embodiments or examples in a proper manner. In addition, a person skilled in the art can integrate or combine different embodiments or examples described in this specification.

Although the embodiments of the present disclosure have been shown and described above, it will be understood that the foregoing embodiments are examples and cannot be construed as limitations on the present disclosure, and a person of ordinary skill in the art can make changes, modifications, substitutions, or variations on the foregoing embodiments within the scope of the present disclosure.

## Claims

1. A transmission, comprising:
a first shaft (2), wherein the first shaft (2) is adapted to be drivingly connected to an engine (1);
a second shaft (3), wherein the second shaft (3) is adapted to be drivingly connected to a wheel end (5); and
a first gear member (31), wherein the first gear member (31) is sleeved on the second shaft (3), the first gear member (31) is drivingly connected to the first shaft (2), the first gear member (31) is selectively drivingly connected to the second shaft (3), and the first gear member (31) is adapted to be drivingly connected to a first motor shaft (41) of a first motor (4).

2. The transmission according to claim 1, further comprising:
a second gear (21), wherein the second gear (21) is sleeved on the first shaft (2);
a first coupling apparatus (23), wherein a first end of the first coupling apparatus (23) is connected to the second gear (21), a second end of the first coupling apparatus (23) is connected to the first shaft (2), and the first end of the first coupling apparatus (23) is selectively drivingly connected to the second end of the first coupling apparatus (23);
a third gear (32), wherein the third gear (32) is disposed on the second shaft (3), and the second gear (21) meshes with the third gear (32);
a fourth gear (22), wherein the fourth gear (22) is disposed on the first shaft (2), and the fourth gear (22) meshes with the first gear member (31); and
a second coupling apparatus (33), wherein a first end of the second coupling apparatus (33) is connected to the first gear member (31), a second end of the second coupling apparatus (33) is connected to the second shaft (3), and the first end of the second coupling apparatus (33) is selectively drivingly connected to the second end of the second coupling apparatus (33).

3. The transmission according to claim 2, wherein the second gear (21) and the third gear (32) are configured as a first gear pair, the first gear member (31) and the fourth gear (22) are configured as a second gear pair, and a gear ratio of the first gear pair is greater than a gear ratio of the second gear pair.

4. The transmission according to claim 2 or 3, wherein an orthographic projection of the first coupling apparatus (23) and an orthographic projection of the second coupling apparatus (33) have an overlapping area along a radial direction of the first coupling apparatus (23).

5. The transmission according to any one of claims 2 to 4, wherein the second coupling apparatus (33) is located between the first gear member (31) and the third gear (32), and the first coupling apparatus (23) is located between the second gear (21) and the fourth gear (22).

6. The transmission according to any one of claims 2 to 5, wherein the second shaft (3) is adapted to be drivingly connected to a second motor shaft (81) of a second motor (8).

7. The transmission according to claim 6, wherein the third gear (32) is adapted to mesh with a ninth gear (82) of the second motor shaft (81).

8. The transmission according to any one of claims 2 to 7, wherein the first gear member (31) is a dual gear, the dual gear comprises a first sub-gear (311) and a second sub-gear (312), the first sub-gear (311) meshes with the fourth gear (22), and the second sub-gear (312) is adapted to be drivingly connected to the first motor shaft (41).

9. The transmission according to any one of claims 1 to 8, wherein an outer side of the first shaft (2) is adapted to sleeve the first motor shaft (41).

10. A powertrain system, comprising:
a transmission, wherein the transmission is the transmission according to any one of claims 1 to 9;
an engine (1), wherein the engine (1) is drivingly connected to the first shaft (2); and
a first motor (4), wherein a first motor shaft (41) of the first motor (4) is drivingly connected to the first gear member (31).

11. The powertrain system according to claim 10, further comprising a second motor (8), and a second motor shaft (81) of the second motor (8) is drivingly connected to the second shaft (3).

12. A vehicle, comprising the powertrain system according to claim 10 or 11.

13. A method for controlling a vehicle, applied to the powertrain system according to claim 10 or 11, the method comprising:
obtaining a status parameter of the vehicle, wherein the status parameter comprises a state of charge value of a battery and required power; and
determining a target working mode based on the status parameter, and controlling the powertrain system to work in the target working mode.
